# EUROPÄISCHE PATENTANMELDUNG

(11) **EP 3 241 853 A1**
(43) Veröffentlichungstag der Anmeldung: **08.11.2017**
(21) Anmeldenummer: 16168280.2
(22) Anmeldetag: 04.05.2016
(51) Int. Cl.: C08C 19/20, C08K 3/04, C08L 15/00

(54) **ELASTOMERE POLYMERE MIT THIOETHER-MODIFIZIERTEM RÜCKGRAT**

(71) Anmelder: Trinseo Europe GmbH, 8810 Horgen (CH)
(72) Erfinder: Döring, Christian, 04420 Markranstädt (DE); Thiele, Sven, 06120 Halle (DE)
(74) Vertreter: Hoffmann Eitle

(57) **Zusammenfassung**

Die vorliegende Erfindung betrifft ein elastomeres Polymer der Formel 1:

P(̵S-R¹-S-R²)*ₙ* Formel 1

worin S ein Schwefelatom ist; P eine Polymerkette ist, die erhältlich ist durch anionische Polymerisation wenigstens eines konjugierten Diens und gegebenenfalls einer oder mehrerer vinylaromatischer Verbindungen und die gegebenenfalls kettenendmodifiziert ist; R¹ unabhängig ausgewählt ist aus C₁-C₁₁-Alkyl, C₆-C₁₁-Aryl, C₇-C₁₁-Aralkyl und C₂-C₁₁-Dialkylether, bevorzugt C₁-C₁₁-Alkyl, besonders bevorzugt C₁-C₈-Alkyl; R² unabhängig ausgewählt ist aus H, C₁-C₁₁-Alkyl, C₆-C₁₁-Aryl, C₇-C₁₁-Aralkyl), C₂-C₁₁-Dialkylether und -SiR³R⁴R⁵ ist, worin R³, R⁴ und R⁵ unabhängig ausgewählt sind aus H, C₁-C₁₆-Alkyl, C₆-C₁₆-Aryl und C₇-C₁₆-Aralkyl, und R² bevorzugt unabhängig ausgewählt ist aus H und -SiR³R⁴R⁵, worin R³, R⁴ und R⁵ unabhängig ausgewählt sind aus H, C₁-C₁₆-Alkyl, C₆-C₁₆-Aryl und C₇-C₁₆-Aralkyl; und n eine ganze Zahl ist, ausgewählt aus 1-200, bevorzugt 1 bis 100, besonders bevorzugt 1 bis 50; wobei die Gruppe(n) -S-R¹-S-R² an das Rückgrat der Polymerkette P gebunden sind.

Die Erfindung betrifft ferner ein Verfahren zur Herstellung des elastomeren Polymers der Formel 1, das die folgenden Schritte umfasst: (i) anionisches Polymerisieren wenigstens eines konjugierten Diens und gegebenenfalls einer oder mehrerer vinylaromatischer Verbindungen zum Erhalt einer anionischen lebenden Polymerkette, (ii) Abbrechen der Polymerisation und (iii) Umsetzen der Polymerkette mit einer Verbindung der folgenden Formel 2 in Gegenwart eines Radikalstarters:

HS-R¹-S-R² Formel 2

worin R¹ und R² wie für Formel 1 definiert sind.

Die Erfindung betrifft schließlich eine unvulkanisierte (unvernetzte) Polymerzusammensetzung, die das elastomere Polymer der Formel 1 umfasst, sowie deren Verwendung zur Herstellung bestimmter vulkanisierter Erzeugnisse.

## Beschreibung

### GEBIET DER ERFINDUNG

Die vorliegende Erfindung betrifft neue elastomere Polymere, insbesondere solche, die am Polymerrückgrat mit einer oder mehreren Thioethergruppen substituiert sind. Die Erfindung betrifft ferner ein Verfahren zur Herstellung der erfindungsgemäßen Polymere, eine unvulkanisierte Polymerzusammensetzung, die zumindest das erfindungsgemäße Polymer enthält, sowie die Verwendung der Polymerzusammensetzung zur Herstellung spezieller (vulkanisierter) Kautschukerzeugnisse.

### HINTERGRUND DER ERFINDUNG

Die Vernetzung der Polymerketten in einer unvulkanisierten (unvernetzten) Kautschukmischung (d.h. einer unvulkanisierten (unvernetzten) elastomeren Polymerzusammensetzung) mittels eines Vulkanisationssystems führt zu einem dreidimensionalen, weitmaschigen Netzwerk, so dass der vernetzte Kautschuk in Abhängigkeit von der Vernetzungsdichte steifer und reißbeständiger wird, insbesondere beständiger gegen Weiterreißen. Der Vulkanisationsprozess mit Schwefel führt zu Schwefelbrücken. Die Länge der Schwefelbrücken hängt vom Verhältnis von Schwefel zu Beschleuniger ab, wobei man zwischen herkömmlichen Netzwerken (Schwefel/Beschleuniger-Verhältnis 10:1 bis 2:1), semieffizienten Netzwerken (2:1 bis 1:2) und effizienten Netzwerken (1:2 bis 1:10) unterscheidet.

Die herkömmliche Schwefelvulkanisation erzeugt vernetzte Polymerketten mit einer Vielzahl freier Kettenenden. Bei der Verformung des Kautschuks absorbieren die freien Polymerenden Energie und wandeln sie in kinetische Energie um, was zu Dämpfung und einer Verschlechterung des Rollwiderstands in Luftreifenanwendungen führt.

WO 2008/076875 A1 beschreibt eine Zusammensetzung, bestehend aus a) einem unvernetzten elastomeren Polymer und b) einem sulfidischen Modifikator. Vernetzte Kautschukmischungen gemäß WO 2008/076875 A1 sollen in Gegenwart von Kieselsäurefüllstoffen einen niedrigeren Rollwiderstand aufweisen.

EP 1 101 789 A1 beschreibt Kautschukmischungen, die mindestens einen Kautschuk enthalten, der durch Polymerisation von Diolefinen und optional vinylaromatischen Monomeren sowie Einführung von Hydroxyl- und/oder Carboxylgruppen hergestellt wurde. Der Kautschuk weist einen Gesamtgehalt von 0,05 bis 5 Gew.-% an gebundenen Hydroxyl- und/oder Carboxylgruppen oder entsprechenden Salzen auf. Die Kautschukmischungen enthalten weiterhin eine Verbindung, die mit den Hydroxyl- und/oder Carboxylgruppen des Kautschuks eine Vernetzungsreaktion eingehen kann. Diese Verbindung ist ein schwefelfreier Vernetzer, ausgewählt aus Polyisocyanaten, Polyuretdionen, blockierten Polyisocyanaten oder Polyepoxiden. Die Kautschukmischungen sollen eine hohe thermische sowie mechanische Belastbarkeit, eine hohe Naßrutschfestigkeit, einen geringen Rollwiderstand und eine hohe Abriebfestigkeit aufweisen und sich deshalb insbesondere für Reifenanwendungen eignen.

US 2002/0045699 A1 beschreibt einen aus Diolefinen erhältlichen Kautschuk, der einen Gehalt von 0,1 bis 40 Gew.-% an unpolaren, gesättigten, linearen Seitenketten aufweist, die über ein Schwefelatom an die Hauptkette gebunden sind. Der Kautschuk kann 0,1 bis 2 Gew.-% an Hydroxyl- und/oder Carboxylgruppen enthalten. Kautschukmischungen beziehungsweise deren Vulkanisate, die den Kautschuk enthalten, sollen verbesserte Abriebeigenschaften, verringertes Weiterreißen sowie eine verbesserte dynamische Dämpfung aufweisen.

US 2006/0089445 A1 beschreibt ein Verfahren zur Herstellung eines gepfropften Dienkautschuks mit funktionellen Gruppen entlang der Polymerketten. Das Verfahren umfasst eine radikalische Aufpfropfungsreaktion eines Mercaptans mit dem Dienkautschuk, die in Lösung oder lösungsmittelfrei durchgeführt wird. Die Aufpfropfungsreaktion wird in der Gegenwart eines Radikalstarters durchgeführt. Weiterhin beinhaltet das Verfahren die Zugabe eines Antioxidans vor der Aufpfropfungsreaktion. Die Mercaptanverbindung enthält eine der folgenden funktionellen Gruppen: Hydroxyl, Carbonyl, Ether, Amin, Nitril und Silan. Das Verfahren soll zu einem geringeren Viskositätsanstieg bei der Aufpropfungsreaktion führen, und die erhaltenen Kautschuke in kieselsäuregefüllten Vulkanisaten sollen einen geringeren Hystereseverlust aufweisen.

US 2015/0299367 A1 beschreibt ein Verfahren für die radikalische Aufpfropfung an ein Dienelastomer, das die folgenden Schritte umfasst: a) Lösen mindestens eines Dienelastomers und mindestens eines Thiols in einem Lösungsmittelgemisch bestehend aus mindestens einem polaren und mindestens einem unpolaren Lösungsmittel, b) Aufheizen des in a) erhaltenen homogenen Gemisches auf die Temperatur für die Aufpfropfungsreaktion und c) Zugeben eines Radikalstarters. Das Verfahren soll höhere Ausbeuten für die Aufpfropfungsreaktion im Vergleich zur Reaktion in unpolaren Lösungsmitteln liefern.

Vor dem oben beschriebenen Hintergrund ist es eine Aufgabe der vorliegenden Erfindung, ein elastomeres Polymer bereitzustellen, dass vorteilhafte Anwendungseigenschaften aufweist, speziell bei Verwendung in der Herstellung von Kraftfahrzeugluftreifen, insbesondere in Bezug auf Rollwiderstand, Nassrutschfestigkeit und Festigkeitseigenschaften.

### ZUSAMMENFASSUNG DER ERFINDUNG

Erfindungsgemäß wurde festgestellt, dass vernetzte (vulkanisierte) Kautschukzusammensetzungen, die auf Basis eines speziellen modifizierten, elastomeren Polymers hergestellt werden, in einem Kraftfahrzeugluftreifen zu einem verminderten Rollwiderstand führen, während andere mechanische Eigenschaften, speziell die Nassrutschfestigkeit und Festigkeitseigenschaften, im Wesentlichen unbeeinträchtigt bleiben oder sogar verbessert sind, im Vergleich mit einer vernetzten Kautschukzusammensetzung auf Basis des unmodifizierten elastomeren Polymers. Die vorteilhaften Eigenschaften wurden insbesondere dann beobachtet, wenn eine Polymerzusammensetzung, die sowohl das elastomere Polymer der Erfindung als auch einen oder mehrere anorganische Füllstoffe enthält, vernetzt (vulkanisiert) wurde. Darüber hinaus wurde festgestellt, dass die vulkanisierten Kautschukmischungen, die das elastomere Polymer der Erfindung und Ruß oder Kieselsäure als Verstärkungsmittel enthalten, eine reduzierte Vernetzungsdichte im Vergleich mit Kautschukmischungen aufweisen, die das unmodifizierte elastomere Polymer enthalten.

In einem ersten Aspekt stellt die Erfindung ein elastomeres Polymer der folgenden Formel 1 bereit:

P-(S-R¹-S-R²)*ₙ* Formel 1

worin
S ein Schwefelatom ist,
P eine Polymerkette ist, die erhältlich ist durch anionische Polymerisation wenigstens eines konjugierten Diens und gegebenenfalls einer oder mehrerer vinylaromatischer Verbindungen und die gegebenenfalls kettenendmodifiziert ist,
R¹ unabhängig ausgewählt ist aus C₁-C₁₁-Alkyl, C₆-C₁₁-Aryl, C₇-C₁₁-Aralkyl und C₂-C₁₁-Dialkylether, bevorzugt C₁-C₁₁-Alkyl, besonders bevorzugt C₁-C₈-Alkyl,
R² unabhängig ausgewählt ist aus H, C₁-C₁₁-Alkyl, C₆-C₁₁-Aryl, C₇-C₁₁-Aralkyl, C₂-C₁₁-Dialkylether und -SiR³R⁴R⁵ ist, worin R³, R⁴ und R⁵ unabhängig ausgewählt sind aus H, C₁-C₁₆-Alkyl, C₆-C₁₆-Aryl und C₇-C₁₆-Aralkyl, und R² bevorzugt unabhängig ausgewählt ist aus H und -SiR³R⁴R⁵, worin R³, R⁴ und R⁵ unabhängig ausgewählt sind aus H, C₁-C₁₆-Alkyl, C₆-C₁₆-Aryl und C₇-C₁₆-Aralkyl, und
n eine ganze Zahl ist, ausgewählt aus 1-200, bevorzugt 1 bis 100, besonders bevorzugt 1 bis 50,
wobei die Gruppe(n) -S-R¹-S-R² an das Rückgrat der Polymerkette P gebunden sind.

In einem zweiten Aspekt stellt die Erfindung ein Verfahren zur Herstellung des elastomeren Polymers der Formel 1 gemäß dem ersten Aspekt der Erfindung bereit, wobei das Verfahren die folgenden Schritte umfasst:
(i) anionisches Polymerisieren wenigstens eines konjugierten Diens und gegebenenfalls einer oder mehrerer vinylaromatischer Verbindungen zum Erhalt einer anionischen lebenden Polymerkette,
(ii) Abbrechen der Polymerisation und
(iii) Umsetzen der Polymerkette mit einer Verbindung der folgenden Formel 2 in Gegenwart eines Radikalstarters:

   HS-R¹-S-R² Formel 2

   worin
   S ein Schwefelatom ist,
   R¹ unabhängig ausgewählt ist aus C₁-C₁₁-Alkyl, C₆-C₁₁-Aryl, C₇-C₁₁-Aralkyl und C₂-C₁₁-Dialkylether, bevorzugt C₄-C₁₁-Alkyl, besonders bevorzugt C₁-C₈-Alkyl, und
   R² unabhängig ausgewählt ist aus H, C₁-C₁₁-Alkyl, C₆-C₁₁-Aryl, C₇-C₁₁-Aralkyl, C₂-C₁₁-Dialkylether und -SiR³R⁴R⁵ ist, worin R³, R⁴ und R⁵ unabhängig ausgewählt sind aus H, C₁-C₁₆-Alkyl, C₆-C₁₆-Aryl und C₇-C₁₆-Aralkyl, und R² bevorzugt unabhängig ausgewählt ist aus H und -SiR³R⁴R⁵, worin R³, R⁴ und R⁵ unabhängig ausgewählt sind aus H, C₁-C₁₆-Alkyl, C₆-C₁₆-Aryl und C₇-C₁₆-Aralkyl.

In einem dritten Aspekt stellt die Erfindung eine unvulkanisierte (unvernetzte) Polymerzusammensetzung bereit, die das elastomere Polymer gemäß dem ersten Aspekt der Erfindung sowie eine oder mehrere Komponenten umfasst, die ausgewählt sind aus (i) Komponenten, die als Ergebnis der Polymerisation zum Erhalt der Polymerkette P erhalten werden oder zu der Polymerisation hinzugegeben werden, und (ii) Komponenten, die nach Entfernung von Lösungsmittel aus der Polymerisation zurückbleiben.

In einem vierten Aspekt stellt die Erfindung die Verwendung der unvulkanisierten Polymerzusammensetzung des dritten Aspekts der Erfindung zur Herstellung von (i) Schuhwerk, (ii) Golfbällen, (iii) Membranen, die keine Verstärkungen enthalten (bspw. Fasern oder Gewebe), (iv) Haftvermittlern, (v) modifizierten Kunststoffen (bspw. Polybutadien/modifiziertes Acrylnitril/Styrol-Copolymere (ABS) und hochschlagfestes Polystyrol (Polybutadien-modifiziertes Polystyrol, HIPS) und (vi) Folien, die nicht für die Automobil- oder Flugzeuginnenausstattung bestimmt sind, bereit.

### AUSFÜHRLICHE BESCHREIBUNG

Das elastomere Polymer des ersten Aspekts der vorliegenden Erfindung wird allgemein durch Formel 1 wie oben angegeben dargestellt.

Die Polymerkette P, die im erfindungsgemäßen Polymer enthalten ist, ist erhältlich durch anionische Polymerisation wenigstens eines konjugierten Diens und gegebenenfalls einer oder mehrerer vinylaromatischer Verbindungen, gewöhnlich in Gegenwart eines Initiators. Nach Abbruch der Polymerisation wird die Polymerkette P in Gegenwart eines Radikalstarters mit einer Verbindung der Formel 2 umgesetzt. Dadurch wird das Rückgrat der Polymerkette durch mindestens eine Gruppe der Formel -S-R¹-S-R² modifiziert. Erfindungsgemäß wird eine Polymerkette durch bis zu 200 Gruppen der Formel -S-R¹-S-R² am Polymerrückgrat modifiziert. Die Modifizierung des Rückgrats des Polymers bedeutet dabei eine Modifizierung einer Wiederholeinheit (Monomereinheit) der Polymerkette, die nicht eine terminale (endständige) Wiederholeinheit ist und wobei sich die Wiederholeinheit aus einem konjugierten Dien ableitet. Beispielsweise entspricht die Modifizierung des Rückgrats einer Polymerkette aus den Monomereinheiten M₁ bis M₁₀₀₀ einer Modifizierung an einem oder mehreren der Monomereinheiten M₂ bis M₉₉₉. Eine Modifizierung an den Monomereinheiten M₁ und/oder M₁₀₀₀ ist im Sinne der vorliegenden Erfindung keine Modifizierung des Rückgrats der Polymerkette, sondern eine Modifizierung des Polymerkettenendes (Kettenendmodifizierung). Eine Wiederholeinheit kann mit maximal einer Gruppe der Formel -S-R¹-S-R² modifiziert sein.

Die Kettenenden der Polymerkette P können optional, vollständig oder teilweise, durch funktionelle Gruppen modifiziert sein. Kettenendmodifizierende Gruppen, deren Erzeugung in einem Polymer während der Polymerisation, bspw. durch funktionale Initiatoren, und/oder deren Anbindung an das Kettenende eines durch anionische Polymerisation hergestellten Polymers sind dem Fachmann bekannt und werden beispielsweise in WO 2014/040640, WO 2014/040639, WO2015/010710, WO 2015/086039 und WO 2015/055252 sowie in der Europäischen Patentanmeldung Nr. 15 181 760.8 beschrieben, die hier durch Verweis eingeführt werden. Die optionale Kettenendmodifizierung der Polymerkette P kann ggf. auch durch eine Gruppe -S-R¹-S-R² erfolgen, wobei diese Gruppe(n) dann aber nicht bei der Bestimmung des Parameterwertes n in Formel 1 berücksichtigt werden.

Exemplarische konjugierte Diene, die zur Herstellung der Polymerkette P geeignet sind, schließen ein: 1,3-Butadien, 2-(C₁-C₅-Alkyl)-1,3-butadien, insbesondere Isopren (2-Methyl-1,3-butadien), 2,3-Dimethyl-1,3-butadien, 1,3-Pentadien, 2,4-Hexadien, 1,3-Hexadien, 1,3-Heptadien, 1,3-Octadien, 2-Methyl-2,4-pentadien, Cyclopentadien und 1,3-Cyclooctadien. Eine Mischung aus zwei oder mehreren konjugierten Dienen kann verwendet werden. Bevorzugte konjugierte Diene schließen ein: 1,3-Butadien und Isopren. In einer Ausführungsform ist das konjugierte Dien 1,3-Butadien.

Das wenigstens eine konjugierte Dien wird zur Herstellung der Polymerkette P vorzugsweise in einer Gesamtmenge von 30 bis 100 Gew.-%, bezogen auf die Gesamtmenge an Monomeren, verwendet.

Die optional zur Herstellung der Polymerkette P verwendete vinylaromatische Verbindung schließt monovinylaromatische Verbindungen, d.h. Verbindungen mit nur einer an eine aromatische Gruppe gebundenen Vinylgruppe, und di-, tri- etc. vinylaromatische Verbindungen ein, die zwei oder mehr an eine aromatische Gruppe gebundene Vinylgruppen aufweisen. Exemplarische vinylaromatische Verbindungen, die optional mit dem wenigstens einen Dien zur Herstellung der Polymerkette P verwendet werden können, schließen ein: Styrol, C₁-C₄-Alkyl-substituiertes Styrol, insbesondere 2-Methylstyrol, 3-Methylstyrol, 4-Methylstyrol, 2,4-Dimethylstyrol, 2,4,6-Trimethylstyrol, α-Methylstyrol, 2,4-Diisopropylstyrol und 4-tert-Butylstyrol, Stilben, Vinylbenzyl-dimethylamin, (4-Vinylbenzyl)dimethylaminoethylether, N,N-Dimethylaminoethylstyrol, tert-Butoxystyrol, Vinylpyridin sowie divinylaromatische Verbindungen, insbesondere 1,2-Divinylbenzol, 1,3-Divinylbenzol und 1,4-Divinylbenzol. Eine Mischung aus zwei oder mehreren davon kann verwendet werden. Eine bevorzugt verwendete vinylaromatische Verbindung ist eine monovinylaromatische Verbindung, besonders bevorzugt Styrol.

Die vinylaromatischen Verbindungen können generell in einer Gesamtmenge von bis zu 70 Gew.-% verwendet werden, insbesondere 5 bis 70 Gew.-%, vorzugsweise bis zu 60 Gew.-% und noch mehr bevorzugt bis zu 50 Gew.-%, bezogen auf die Gesamtmenge an Monomeren, mit der Maßgabe, dass di-, tri- und höhervinylaromatische Verbindungen in einer Gesamtmenge von nicht mehr als 1 Gew.-% verwendet werden, bezogen auf die Gesamtmenge an Monomeren. Obwohl es keine allgemeinen Beschränkungen hinsichtlich des Anteils an Styrol gibt, der zur Herstellung der Polymerkette verwendet wird, stellt Styrol typischerweise 5 bis 70 Gew.-%, vorzugsweise 5 bis 60 Gew.-% und besonders bevorzugt 5 bis 50 Gew.-% der Gesamtmenge an Monomeren dar. Eine Menge von weniger als 5 Gew.-% Styrol kann zu einem verschlechterten Gleichgewicht von Rollwiderstand, Nassrutschfestigkeit und Abriebbeständigkeit sowie zu reduzierten mechanischen Festigkeitseigenschaften führen, während eine Menge von mehr als 70 Gew.-% erhöhte Hystereseverluste zur Folge haben kann.

Andere Comonomere als das konjugierte Dien und die vinylaromatische Verbindung können in der Herstellung der Polymerkette P verwendet werden und schließen Acrylmonomere wie Acrylnitril, Acrylate, z.B. Acrylsäure, Methylacrylat, Ethylacrylat, Propylacrylat und Butylacrylat, und Methacrylate, z.B. Methylmethacrylat, Ethylmethacrylat, Propylmethacrylat und Butylmethacrylat, ein. Die Gesamtmenge an anderen Monomeren als das konjugierte Dien und die vinylaromatische Verbindung ist vorzugsweise nicht größer als 10 Gew.-%, besonders bevorzugt nicht größer als 5 Gew.-% aller Monomere. In einer besonders bevorzugten Ausführungsform werden neben dem konjugierten Dien und ggf. der vinylaromatischen Verbindung keine anderen Comonomere verwendet.

In einer besonders bevorzugten Ausführungsform ist die Polymerkette P erhältlich durch statistische Copolymerisation von 1,3-Butadien als konjugiertes Dien mit Styrol als vinylaromatischer Verbindung, wobei vorzugsweise Styrol in einer Menge von 5 bis 70 Gew.-% verwendet wird.

Die Polymerkette P kann ein statistisches oder Block-Copolymer sein. Die Polymerkette P kann auch Polymerabschnitte unterschiedlicher Mikrostrukturen mit jeweils statistischer Styrolverteilung aufweisen.

Vorzugsweise 40 Gew.-% oder mehr der Styrol-Wiederholeinheiten sind einzeln in der Polymerkette eingebaut, und 10 Gew.-% oder weniger sind "Blöcke" von acht oder mehr Styroleinheiten, die aufeinanderfolgend eingebaut sind. Ein Polymer außerhalb dieser Grenzen kann zu erhöhten Hystereseverlusten führen. Die Länge der aufeinanderfolgend eingebauten vinylaromatischen Einheiten, inkl. der Styrol-Wiederholeinheiten, kann durch ein Ozonolyse-Gelpermeationschromatographieverfahren bestimmt werden, das von Tanaka et al. entwickelt wurde (Polymer, Vol. 22, 1721-1723 (1981)).

Die Polymerisation des wenigstens einen konjugierten Diens und ggf. einer oder mehrerer vinylaromatischer Verbindungen zum Erhalt der Polymerkette P wird gewöhnlich in Gegenwart eines oder mehrerer Initiatoren durchgeführt. Geeignete Initiatoren schließen Organometallverbindungen ein, speziell Organolithiumverbindungen, bspw. Ethyllithium, Propyllithium, n-Butyllithium, sek-Butyllithium, tert-Butyllithium, Phenyllithium, Hexyllithium, 1,4-Dilithio-n-butan, 1,3-Di(2-lithio-2-hexyl)benzol und 1,3-Di(2-lithio-2-hexyl)benzol und 1,3-Di(2-lithio-2-propyl)benzol. Darunter sind n-Butyllithium und sek-Butyllithium bevorzugt. Die Menge des Initiators wird auf Basis der zu polymerisierenden Monomermenge und des Zielmolekulargewichts der Polymerkette P gewählt. Die Gesamtmenge an Initiator beträgt typischerweise 0,05 bis 20 mmol, vorzugsweise 0,1 bis 10 mmol auf 100 g Monomere (Gesamtmenge an polymerisierbaren Monomeren).

Zur Monomermischung oder Polymerisationsreaktion kann weiterhin eine polare Koordinatorverbindung hinzugegeben werden, um die Mikrostruktur des konjugierten Dienanteils, d.h. den Gehalt an Vinylbindungen, oder die Zusammensetzungsverteilung einer ggf. vorhandenen vinylaromatischen Verbindung in der Polymerkette P einzustellen. Es können zwei oder mehr polare Koordinatorverbindungen gleichzeitig verwendet werden. Polare Koordinatorverbindungen sind generell Lewis-Basen, und geeignete exemplarische Lewis-Basen schließen ein: Etherverbindungen wie beispielsweise Diethylether, Di-n-butylether, Ethylenglykoldiethylether, Ethylenglykoldibutylether, Diethylenglykoldimethylether, Propylenglykoldimethylether, Propylenglykoldiethylether, Propylenglykoldibutylether, (C₁-C₈-Alkyl)tetrahydrofurylether (inkl. Methyltetrahydrofurylether, Ethyltetrahydrofurylether, Propyltetrahydrofurylether, Butyltetrahydrofurylether, Hexyltetrahydrofurylether und Octyltetrahydrofurylether), Tetrahydrofuran, 2,2-(Bistetrahydrofurfuryl)propan, Bistetrahydrofurfurylformal, Methylether des Tetrahydrofurfurylalkohols, Ethylether des Tetrahydrofurfurylalkohols, Butylether des Tetrahydrofurfurylalkohols, α-Methoxytetrahydrofuran, Dimethoxybenzol und Dimethoxyethan, sowie tertiäre Amine wie Triethylamin, Pyridin, N,N,N',N'-Tetramethylethylendiamin, Dipiperidinoethan, Methylether des N,N-Diethyl-ethanolamins, Ethylether des N,N-Diethylethanolamin, N,N-Diethylethanolamin und Dimethyl-N,N-tetrahydrofurfurylamin. Beispiele für bevorzugte polare Koordinatorverbindungen werden in WO 2009/148932 beschrieben, das hier durch Verweis eingeführt wird.

Die polare Koordinatorverbindung wird typischerweise in einem Molverhältnis von polarer Koordinatorverbindung zu Initiatorverbindung von 0,012:1 bis 10:1, vorzugsweise 0,1:1 bis 8:1 und besonders bevorzugt 0,25:1 bis ca. 6:1 hinzugegeben.

Das zur Herstellung der Polymerkette verwendete Polymerisationsverfahren wird vorzugsweise als Lösungspolymerisation durchgeführt, in der das gebildete Polymer im Wesentlichen löslich in der Reaktionsmischung ist, oder als Suspensions/Dreiphasen(Slurry-)polymerisation, in der das gebildete Polymer im Wesentlichen unlöslich in der Reaktionsmischung ist. Vorzugsweise wird die Polymerkette P in einer Lösungspolymerisation erhalten. Als Lösungsmittel wird in herkömmlicher Weise ein Kohlenwasserstoff verwendet, der den Initiator, die Koordinatorverbindung oder die aktive Polymerkette nicht deaktiviert. Zwei oder mehr Lösungsmittel können in Kombination verwendet werden. Exemplarische Lösungsmittel schließen aliphatische und aromatische Lösungsmittel ein. Spezielle Beispiele sind (einschließlich aller Konstitutionsisomere): Propan, Butan, Pentan, Hexan, Heptan, Octan, Buten, Propen, Penten, Benzol, Toluol, Ethylbenzol und Xylol. Lösungspolymerisation wird üblicherweise bei einem Druck von nicht mehr als 10 MPa (absolut), vorzugsweise in einem Temperaturbereich von 0 bis 120°C durchgeführt. Die Polymerisation kann diskontinuierlich, kontinuierlich oder halbkontinuierlich durchgeführt werden.

Im elastomeren Polymer der Formel 1 ist R¹ unabhängig ausgewählt aus C₁-C₁₁-Alkyl, C₆-C₁₁-Aryl, C₇-C₁₁-Aralkyl und C₂-C₁₁-Dialkylether, bevorzugt aus C₁-C₁₁-Alkyl und besonders bevorzugt aus C₁-C₈-Alkyl. Ausgewählte Beipspiele für R¹ sind Ethyliden [-(CH₂)₂-], Propyliden [-(CH₂)₃-] und Hexyliden [-(CH₂)₆-].

R² ist unabhängig ausgewählt aus H, C₁-C₁₁-Alkyl, C₆-C₁₁-Aryl, C₇-C₁₁-Aralkyl, C₂-C₁₁-Dialkylether und -SiR³R⁴R⁵ ist, worin R³, R⁴ und R⁵ unabhängig ausgewählt sind aus H, C₁-C₁₆-Alkyl, C₆-C₁₆-Aryl und C₇-C₁₆-Aralkyl. R² ist bevorzugt unabhängig ausgewählt aus H und -SiR³R⁴R⁵, worin R³, R⁴ und R⁵ unabhängig ausgewählt sind aus H, C₁-C₁₆-Alkyl, C₆-C₁₆-Aryl und C₇-C₁₆-Aralkyl. Ausgewählte Beispiele für R² sind -SiMe₃, -SiEt₃, -SiPr₃, -SiBu₃, -SiMe₂Et, -SiMe₂Pr, -SiMe₂Bu, -SiMe₂(C₆H₁₃) und -SiMe₂(C₈H₁₇), wobei Pr für n-Propyl oder i-Propyl steht und Bu für n-Butyl, t-Butyl oder i-Butyl steht.

Ausgewählte Beispiele für die Teilstruktur -S-R¹-S-R² in Formel 1 und Formel 2 sind -S-(CH₂)₂-S-SiMe₃, -S-(CH₂)₂-S-SiMe₂Et, -S-(CH₂)₂-S-SiMe₂Pr, -S-(CH₂)₂-S-SiMe₂Bu, -S-(CH₂)₂-S-SiEt₃, -S-(CH₂)₃-S-SiMe₃, -S-(CH₂)₃-S-SiMe₂Et, -S-(CH₂)₃-S-SiMe₂Pr, -S-(CH₂)₃-S-SiMe₂Bu, -S-(CH₂)₃-S-SiEt₃, -S-(CH₂)₆-S-SiMe₃, -S-(CH₂)₆-S-SiMe₂Et, -S-(CH₂)₆-S-SiMe₂Pr, -S-(CH₂)₆-S-SiMe₂Bu und -S-(CH₂)₆-S-SiEt₃.
n eine ganze Zahl ist, ausgewählt aus 1-200, bevorzugt 1 bis 100, besonders bevorzugt 1 bis 50.

Allgemein wird das elastomere Polymer der Formel 1 gemäß dem ersten Aspekt der Erfindung durch ein Verfahren hergestellt, dass die folgenden Schritte umfasst (zweiter Aspekt der Erfindung):
(i) anionisches Polymerisieren wenigstens eines konjugierten Diens und gegebenenfalls einer oder mehrerer vinylaromatischer Verbindungen zum Erhalt einer anionischen lebenden Polymerkette,
(ii) Abbrechen der Polymerisation und
(iii) Umsetzen der Polymerkette mit einer Verbindung der folgenden Formel 2 in Gegenwart eines Radikalstarters:

   HS-R¹-S-R² Formel 2

   worin S, R¹ und R², in allgemeinen und bevorzugten Ausführungsformen und Kombinationen daraus, wie für Formel 1 definiert sind.

Schritt (i) des Verfahrens entspricht der oben beschriebenen Herstellung der Polymerkette P, und für Einzelheiten und Bedingungen sowie bevorzugte Ausführungsformen wird auf die oben beschriebene Herstellung der Polymerkette P verwiesen.

Die anionische Polymerisation des Schrittes (i) und damit die erhaltene anionische lebende Polymerkette wird in einem Schritt (ii) abgebrochen. Dieser Polymerisations-bzw. Kettenabbruch kann in herkömmlich bekannter Weise mittels einer Protonenquelle oder eines funktionellen Reagens erfolgen. Ein Mittel zum Kettenabbruch enthält zumindest ein aktives Wasserstoffatom, das mit dem anionischen Polymerkettenende reagieren kann und dieses protoniert. Ein einzelnes oder zwei oder mehr Kettenabbruchmittel in Kombination können verwendet werden. Geeignete Kettenabbruchmittel schließen Wasser (Wasserdampf), Alkohole, Amine, Mercaptane und organische Säuren ein, bevorzugt Alkohole und besonders bevorzugt C₁-C₄-Alkohole, bevorzugt Methanol und Ethanol und besonders bevorzugt Methanol. Anstelle von oder zusammen mit dem Kettenabbruchmittel können auch ein oder mehrere, das Kettenende modifizierende Verbindungen eingesetzt werden, um die Polymerkette an den Kettenenden zu modifizieren. Entsprechende Verbindungen sind dem Fachmann aus dem Stand der Technik bekannt, und es wird exemplarisch auf die Offenbarung der bereits oben genannten Dokumente WO 2014/040640, WO 2014/040639, WO 2015/086039 und WO 2015/055252 verwiesen.

Nach dem Kettenabbruch in Schritt (ii) wird das erhaltene, an den Kettenenden deaktivierte Polymer mit einer Verbindung der Formel 2 in Gegenwart eines Radikalstarters umgesetzt. Die Reaktion führt zur Modifizierung des Rückgrats der Polymerkette und damit zu einem elastomeren Polymer der Formel 1. Die Modifizierung in Schritt (iii) wird typischerweise direkt nach Schritt (ii) durchgeführt. Optional kann jedoch nach dem Schritt (ii) das Lösungsmittel entfernt und/oder ausgetauscht werden, bevor die Modifizierung in Schritt (iii) durchgeführt wird.

Die Menge der in Schritt (iii) zugesetzten Verbindung(en) der Formel 2 hängt von der Länge der Polymerkette P und dem gewünschten Index n in Formel 1 ab. Typischerweise beträgt diese Menge 0,01-10 Gew.-% bezogen auf die Gesamtmenge aller Monomere, vorzugsweise 0,025-7,5 Gew.-% und besonders bevorzugt 0,05-5 Gew.-%.

Der Radikalstarter wird typischerweise in einer Menge von 1-25 mol%, vorzugsweise 2-20 mol% zugesetzt, bezogen auf die Menge der eingesetzten Verbindung(en) der Formel 2. Die Reaktion in Schritt (iii) wird im Allgemeinen bei einer Temperatur von 50-180°C, vorzugsweise bei 60-150°C durchgeführt.

Der in Schritt (iii) verwendete Radikalstarter kann beispielsweise aus Peroxiden, Azoinitiatoren und Photoinitiatoren ausgewählt werden, und zwei oder mehrere Radikalstarter können in Kombination eingesetzt werden. Bevorzugt wird ein Peroxid als Radikalstarter verwendet, bspw. Lauroylperoxid, Dicumylperoxid, Benzoylperoxid, tert-Butylperoxid oder 1,1-Di(tert.-butylperoxy)-3,3,5-trimethylcyclohexan. Ein Beispiel für einen Azoinitiator ist 2,2'-Azobis(2-methylpropionitril).

Die unvulkanisierte Polymerzusammensetzung gemäß dem dritten Aspekt der vorliegenden Erfindung umfasst das elastomere Polymer gemäß dem ersten Aspekt der Erfindung und eine oder mehrere Komponenten ausgewählt aus (i) Komponenten, die als Ergebnis der Polymerisation zum Erhalt der Polymerkette P erhalten werden oder zu der Polymerisation hinzugegeben werden, und (ii) Komponenten, die nach Entfernung von Lösungsmittel aus der Polymerisation zurückbleiben.

Die unvulkanisierte (unvernetzte) Polymerzusammensetzung wird typischerweise durch herkömmliche Aufarbeitung der im Schritt (iii) erhaltenen Reaktionsmischung erhalten. Aufarbeitung bedeutet die Entfernung von Lösungsmittel durch Destillation oder Vakuumverdampfung.

Komponenten, die als Ergebnis der Polymerisation zum Erhalt der Polymerkette P erhalten werden oder zur der Polymerisation hinzugegeben werden, schließen insbesondere Verstrecker-Öle, Stabilisatoren, Füllstoffe und weitere Polymere ein. In der Polymerzusammensetzung ist das erfindungsgemäße elastomere Polymer der Formel 1 vorzugsweise zu mindestens 15 Gew.%, besonders bevorzugt mindestens 30 Gew.% und noch mehr bevorzugt mindestens 45 Gew.% enthalten, bezogen auf die gesamte Polymermenge in der Zusammensetzung. Die verbleibende Menge an nicht erfindungsgemäßem Polymer setzt sich zusammen aus den weiteren, nicht erfindungsgemäßen Polymeren, die in der Polymerisation entstehen oder hinzugegeben werden.

Ein oder mehrere Öle können zum elastomeren Polymer vor oder nach Schritt (iii), vorzugsweise nach Schritt (iii), hinzugegeben werden. Beispiele und eine Klassifizierung von Ölen werden in WO 2009/148932 und US 2005/0159513 angegeben, die hier beide durch Verweis eingeführt werden. Die Polymerzusammensetzung kann Öle in einer Gesamtmenge von 0 bis 70 phr, vorzugsweise 0,1 bis 60 phr und besonders bevorzugt 0,1 bis 50 phr enthalten.

Ein oder mehrere Stabilisatoren ("Antioxidantien") können optional zum elastomeren Polymer vor oder nach Schritt (iii), vorzugsweise nach Schritt (iii), hinzugegeben werden, um den Abbau der elastomeren Polymers durch molekularen Sauerstoff zu verhindern. Antioxidantien auf Basis von sterisch gehinderten Phenolen wie 2,6-Di-tert-butyl-4-methylphenol, 6,6'-Methylen-bis(2-tert-butyl-4-methylphenol), Isooctyl-3-(3,5-di-tert-butyl-4-hydroxyphenyl)propionate, Hexamethylenbis[3-(3,5-di-tert-butyl-4-hydroxy-phenyl)propionat], Octadecyl-3-(3,5-di-tert-butyl-4-hydroxyphenyl)propionat, Isotridecyl-3-(3,5-di-tert-butyl-4-hydroxyphenyl)propionat, 1,3,5-Trimethyl-2,4,6-tris(3,5-di-tert-butyl-4-hydroxybenzyl)benzol, 2,2'-Ethyliden-bis-(4,6-di-tert-butylphenol), Tetrakis-[methylen-3-(3,5-di-tert-butyl-4-hydroxyphenyl)propionat]methan, 2-[1-(2-Hydroxy-3,5-di-tert-pentylphenyl)ethyl]-4,6-di-tert-pentylphenylacrylat und 2-tert-Butyl-6-(3-tert-butyl-2-hydroxy-5-methylbenzyl)-4-methylphenylacrylat, und Antioxidantien auf Basis von Thioestern wie 4,6-Bis(octylthiomethyl)-o-cresol und Pentaerythrityl-tetrakis(3-laurylthiopropionat) werden typischerweise verwendet. Weitere Beispiele für geeignete Stabilisatoren werden beschrieben in Röthemeyer-Sommer, Kautschuk Technologie, 2. Aufl., (Hanser Verlag, 2006) 340-344, mit weiteren Verweisen.

Ein oder mehrere Füllstoffe können dem Polymer hinzugegeben werden, während der anionischen Polymerisation (i), nach der anionischen Polymerisation (i) und vor dem Polymerisationsabbruch (ii), nach dem Polymerisationsabbruch (ii) und vor dem Umsetzen (iii) des Polymers mit der Verbindung der Formel 2, und/oder nach dem Umsetzen (iii) des Polymers mit der Verbindung der Formel 2, vorzugsweise nach dem Umsetzen (iii) des Polymers mit der Verbindung der Formel 2.

Beispiele für geeignete Füllstoffe schließen ein: Ruß (inkl. leitfähigem Ruß), Kohlenstoffnanoröhren (CNT) (inkl. diskreten CNTs, hohlen Kohlenstofffasern (HCF) und modifizierten CNTs, die ein oder mehrere funktionelle Gruppen wie Hydroxyl, Carboxyl und Carbonyl tragen), Graphit, Graphen (inkl. diskreten Graphenplättchen), Kieselsäure, Kohlenstoff-Kieselsäure-Zweiphasenfüllstoff, Tonerden (Schichtsilikate, inkl. Blähnanotonerden und organischen Tonerden), Calciumcarbonat, Magnesiumcarbonat, Lignin, amorphe Füllstoffe wie Füllstoffe auf Glaspartikelbasis, Füllstoffe auf Stärkebasis und Kombinationen daraus. Weitere Beispiele für geeignete Füllstoffe werden in WO 2009/148932 beschrieben, das hier durch Verweis eingeführt wird. Füllstoffe können in dem Fachmann geläufigen Mengen in der Polymerzusammensetzung eingesetzt werden. Beispielsweise kann Ruß typischerweise in eine Menge von 2 bis 100 Gew.teilen, oder 5 bis 100 Gew.teilen, oder 10 bis 100 Gew.teilen, oder 10 bis 95 Gew.teilen auf 100 Gew.teile des gesamten Polymergehalts verwendet werden.

Weitere Polymere als Teil der Polymerzusammensetzung der Erfindung sind Polymere, die im Polymerisationsprozess gebildet werden, aber kein elastomeres Polymer gemäß Formel 1 der Erfindung darstellen.

Das elastomere Polymer der Formel 1 gemäß dem ersten Aspekt der Erfindung und die entsprechende unvulkanisierte Polymerzusammensetzung des dritten Aspekts der Erfindung können vorteilhaft in der Herstellung von (i) Schuhwerk, (ii) Golfbällen, (iii) Membranen, die keine Verstärkungen enthalten, (iv) Haftvermittlern, (v) modifizierten Kunststoffen und (vi) Folien, die nicht für die Automobil- oder Flugzeuginnenausstattung bestimmt sind, verwendet werden. Die unter (iii) genannten Verstärkungen sind bspw. Fasern und Gewebe. Die unter (v) genannten modifizierten Kunststoffe sind bspw. Polybutadien/modifiziertes Acrylnitril/Styrol-Copolymere (ABS) und hochschlagzähes Polystyrol (HIPS).

### BEISPIELE

"Raumtemperatur" (RT) wie hier verwendet bezeichnet eine Temperatur von etwa 20-25°C oder, bei Messung eines speziellen Parameters, von 20°C.

### Synthese des Polymerrückgratmodifikators BM1

1,6-Hexanedithiol (12,7 g, 84,2 mmol) wurde in 300 mL tert-Butylmethylether gelöst, und n-BuLi (30,0 g mL, 92,5 mmol, 20 Gew.-% in Cyclohexan) wurde hinzugetropft. Die Mischung wurde für 2 h bei Raumtemperatur gerührt, und tert-Butyldimethylchlorsilan wurde hinzugegeben (12,6 g, 83,7 mmol). Nach Refluxieren der Mischung über Nacht wurde sie mit Wasser versetzt. Die organische Phase wurde abgetrennt und zweimal mit Wasser gewaschen. Die gesammelten wässrigen Phasen wurden vereinigt und mit Diethylether gewaschen. Die gesammelten und vereinigten organischen Phasen wurden mit Natriumsulfat getrocknet, und die flüchtigen Bestandteile wurden im Vakuum entfernt. Der Rückstand wurde fraktioniert destilliert, unter Erhalt einer Ausbeute von 64% an **BM1,** Siedepunkt 105°C bei 0,2 mbar. ¹H-NMR (400 Hz, C₆D₆, 298 K): δ = 0,21 (s, 6H, Si(C*H₃*)₂); 0,99 (s, 9H, C(C*H*₃)₃); 1,15-1,05 (m, 3H, C*H*₂ / S*H*); 1,23-1,15 (m, 2H, C*H*₂); 1,29 (qu, 2H, C*H*₂); 1,50 (qu, 2H, C*H*₂); 2,12 (q, 2H, C*H*₂-SH); 2,40 (t, 2H, C*H*₂-S-Si); ¹³C-NMR (101 Hz, C₆D₆, 298 K): δ = -3,09 (*C*H₃), 19,50 (*C*H₂), 24,90 (*C*H₂), 26,91 (*C*H₃), 27,04 (*C*H₂), 28,43 (*C*H₂), 28,67 (*C*H₂), 33,63 (*C*H₂), 34,53 (*C*H₂).

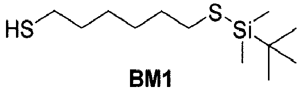

### Copolymerisation von 1,3-Butadien mit Styrol (Vergleichspolymer V)

Die Copolymerisation wurde in einem doppelwandigen 40 L-Stahlreaktor durchgeführt, der vor der Zugabe des organischen Lösungsmittels, der Monomere, der polaren Koordinatorverbindung, der Initiatorverbindung und anderer Komponenten mit Stickstoff gespült wurde. Die folgenden Komponenten wurden in der angegebenen Reihenfolge hinzugegeben: Cyclohexan-Lösungsmittel (18.560 g); Butadien-Monomer (1.777 g), Styrol-Monomer (448 g) und Tetramethylethylendiamin (TMEDA, 1,0 g), und die Mischung wurde auf 40°C erhitzt, gefolgt von Titration mit n-Butyllithium zur Entfernung von Feuchtigkeitsspuren oder anderen Verunreinigungen. n-BuLi (17,6 mmol) wurde zum Starten der Polymerisationsreaktion in den Polymerisationsreaktor hinzugegeben. Die Polymerisation wurde für 20 Minuten durchgeführt, wobei die Polymerisationstemperatur auf nicht mehr als 70°C ansteigen gelassen wurde. Dann wurden Butadien (1.202 g) und Styrol (91 g) als Monomere über 55 min hinweg hinzugegeben. Die Polymerisation wurde für weitere 20 Minuten durchgeführt, gefolgt von der Zugabe von 63 g Butadien-Monomer. Nach 20 Minuten wurde die Polymerisation durch Zugabe von Methanol abgebrochen (ein Äquivalent auf Basis des Initiators). Zur Polymerlösung wurde 0,25 Gew.-% IRGANOX 1520, bezogen auf das Monomer-Gesamtgewicht, als Stabilisator hinzugegeben. Diese Mischung wurde für 10 Minuten gerührt. Die resultierende Polymerlösung wurde dann mit Wasserdampf für eine Stunde gestrippt, um Lösungsmittel und andere flüchtige Stoffe zu entfernen, und in einem Ofen bei 70°C für 30 Minuten und dann zusätzliche für drei Tage bei Raumtemperatur getrocknet.

### Herstellung von Rückgrat-modifiziertem Polymer A

Zunächst wurde die Copolymerisation von 1,3-Butadien und Styrol analog der Herstellung des Vergleichspolymers V durchgeführt. Die Rückgrat-Modifizierung wurde in einem doppelwandigen 10 L-Stahlreaktor durchgeführt, der zunächst mit Stickstoff gespült wurde, bevor das Vergleichspolymer V (4.000 g) hinzugegeben wurde, gefolgt von der Zugabe von Cyclohexan (2.000 g) und dem Rückgratmodifikator **BM1** (7,7 g, 29,1 mmol). Die Mischung wurde auf 95°C erhitzt, und Lauroylperoxidlösung in Cyclohexan wurde in 4 Portionen alle 30 Minuten (1,13/0,86/0,57/0,28 mmol, insgesamt 2,84 mmol) hinzugegeben. Die Polymerlösung wurde auf Raumtemperatur abgekühlt, und 1,2 g IRGANOX 1520 wurden hinzugegeben. Eine GC-Analyse des nicht umgesetzten Rückgratmodifikator **BM1** zeigte eine Pfropfausbeute von 60%. Die modifizierte Polymerlösung wurde dann mit Wasserdampf für eine Stunde gestrippt, um Lösungsmittel und andere flüchtige Stoffe zu entfernen, und in einem Ofen bei 70°C für 30 Minuten und dann zusätzliche für drei Tage bei Raumtemperatur getrocknet.

### Herstellung von Polymer A' durch Extraktion des nicht umgesetzten Rückgratmodifikators BM1 aus Polymer A

Polymer A (94 g) wurde in einer Schneidmühle zerkleinert und die erhaltenen Kautschukkrümel in Isopropanol (800 g) suspendiert. Die Suspension wurde für 8 Stunden refluxiert und die Kautschukkrümel abgetrennt und getrocknet. Eine GC Analyse zeigte, dass 90% des enthaltenen Rückgratmodifikator **BM1** entfernt wurden.

**Tabelle 1. Analytische Daten zum Vergleichspolymer V und Polymer A**

| | Mw [g/mol] | Mn [g/mol] | Mooney viscosity | Vinyl content [Gew%] | Styrene content [Gew%] | Tg [°C] |
|---|---|---|---|---|---|---|
| Vergleichspolymer V | 334417 | 303967 | 35,3 | 29,2 | 15,1 | -60,6 |
| Polymer A | 476469 | 358682 | 66,2 | 29,6 | 14,7 | -60,7 |

### Herstellung von Kautschukmischungen und Vergleichsversuche

Die Erfindung soll nun anhand von Vergleichs- und Ausführungsbeispielen, die in den Tabellen 4 bis 6 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr) oder auf 100 Gewichtsteile Kieselsäure bezogen sind (phf).

Die Mischungsherstellung erfolgte unter üblichen Bedingungen in zwei Stufen in einem Labortangentialmischer.

Die Kautschukmischungen E1, E2 und E4 enthalten 90 phr des erfindungsgemäßen Polymers A (Formel 1). Bei den Kautschukmischungen V1, V3 und V4 wurde anstelle des Polymers A gemäß Formel 1 das Vergleichspolymer V verwendet, das im Vergleich zu Polymer A ein vergleichbares Molekulargewicht, einen vergleichbaren Vinyl-Gehalt und einen vergleichbaren Styrol-Gehalt aufweist. Das Vergleichspolymer ist nicht modifiziert und kein gekoppeltes Polymer.

Die Kautschukmischung V2 wurde mit einer größeren Menge an Vulkanisationsagenzien (Beschleuniger und Schwefel) auf die gleiche Härte bei 70 °C eingestellt wie E1 und ist somit die härtegleiche Referenz.

Die erfindungsgemäße Kautschukmischung E3 enthält das Polymer A', das nach erfolgter Modifikation aus dem Polymer A durch Aufreinigung, d.h. Abtrennung von ggf. restlichem Modifikator BM1, erhalten wurde.

Aus sämtlichen Mischungen wurden Prüfkörper durch Vulkanisation hergestellt und mit diesen Prüfkörpern für die Kautschukindustrie typische Materialeigenschaften bestimmt. Für die oben beschriebenen Tests an Prüfkörpern wurden folgende Testverfahren angewandt:
- Shore-A-Härte (Einheit Shore A, abgekürzt ShA) bei Raumtemperatur (RT) und bei 70 °C gemäß DIN 53 505
- Rückprallelastizität (abgekürzt Rückprall) bei Raumtemperatur (RT) und 70°C gemäß DIN 53 512
- Spannungswerte bei 50%, 100%, 200%, 300 % Dehnung (Modul 50, Modul 100, Modul 200 bzw. Modul 300) bei Raumtemperatur (RT) gemäß DIN 53 504
- Zugfestigkeit und Bruchdehnung bei Raumtemperatur gemäß DIN 53 504
- Abrieb bei Raumtemperatur gemäß DIN53 516 bzw. DIN/ISO 4649
- Maximaler Verlustfaktor tan δ (max) aus dynamisch-mechanischer Messung gemäß DIN 53 513 (Temperaturdurchlauf, "temperature sweep")

**Tabelle 4**

| **Bestandteil** | **Einheit** | **V1** | **V2** | **E1** |
|---|---|---|---|---|
| NR TSR | phr | 10 | 10 | 10 |
| Vergleichspolymer V | phr | 90 | 90 | - |
| Polymer A | phr | - | - | 90 |
| Ruß N339 | phr | 85 | 85 | 85 |
| Öl TDAE | phr | 45 | 45 | 45 |
| Alterungsschutzmittel ^{a)} | phr | 4 | 4 | 4 |
| Stearinsäure | phr | 2,5 | 2,5 | 2,5 |
| Zinkoxid | phr | 2,5 | 2,5 | 2,5 |
| Beschleuniger CBS | phr | 6,4 | 9,6 | 6,4 |
| Schwefel | phr | 0,64 | 0,96 | 0,64 |

| **Physikalische Eigenschaften** | | | | |
|---|---|---|---|---|
| Shore-Härte bei RT | Shore A | 65 | 68 | 66 |
| Shore-Härte bei 70 °C | Shore A | 60,4 | 64 | 64 |
| Rückprallelastizität bei RT | % | 31 | 31,8 | 37,8 |
| Rückprallelastizität bei 70 °C | % | 45,8 | 49,1 | 55,3 |
| Diff. Rückpr. (70 °C- RT) | | 14,8 | 17,3 | 17,5 |
| Modul 50 | MPa | 1,4 | 1,7 | 1,8 |
| Modul 100 | MPa | 2,5 | 3,5 | 4,2 |
| Zugfestigkeit | MPa | 11,7 | 11,7 | 11,3 |
| Bruchdehnung | % | 342 | 265 | 206 |
| Tan δ (max) | | 0,259 | 0,243 | 0,188 |
| Abrieb | mm³ | 94 | 129 | 92 |

**Tabelle 5**

| **Bestandteil** | **Einheit** | **V3** | **E2** | **E3** | **V4** | **E4** |
|---|---|---|---|---|---|---|
| NR TSR | phr | 10 | 10 | 10 | 10 | 10 |
| Vergleichspolymer V | phr | 90 | - | - | 90 | - |
| Polymer A | phr | - | 90 | - | - | 90 |
| Polymer A' | phr | - | - | 90 | - | - |
| Kieselsäure ^{b)} | phr | 95 | 95 | 95 | 95 | 95 |
| Silan ^{c)} | phf | 7,2 | 7,2 | 7,2 | - | - |
| Silan ^{d)} | phf | - | - | - | 8,1 | 8,1 |
| ÖI TDAE | phr | 35 | 35 | 35 | 35 | 35 |
| Alterungschutzmittel ^{a)} | phr | 4 | 4 | 4 | 4 | 4 |
| Stearinsäure | phr | 2,5 | 2,5 | 2,5 | 2,5 | 2,5 |
| Zinkoxid | phr | 2,5 | 2,5 | 2,5 | 2,5 | 2,5 |
| DPG | phr | 2,0 | 2,0 | 2,0 | 2,0 | 2,0 |
| CBS | phr | 6,4 | 6,4 | 6,4 | 6,4 | 6,4 |
| Schwefel | phr | 0,64 | 0,64 | 0,64 | 0,64 | 0,64 |

| **Physikalische Eigenschaften** | | | | | | |
|---|---|---|---|---|---|---|
| Härte RT | Shore A | 74,2 | 73,9 | 76 | 74,2 | 73,9 |
| Härte 70 °C | Shore A | 69,6 | 70,6 | 72,2 | 69,6 | 70,6 |
| Rückpr. RT | % | 36,9 | 41 | 40,5 | 36,9 | 41 |
| Rückpr. 70 °C | % | 47,4 | 55,9 | 54,6 | 47,4 | 55,9 |
| Diff. Rückpr. | | 10,5 | 14,9 | 14,1 | 10,5 | 14,9 |
| Modul 50 | MPa | 1,8 | 2,1 | 2,1 | 1,8 | 2,1 |
| Modul 100 | MPa | 2,9 | 4,2 | 4 | 2,9 | 4,2 |
| Modul 200 | MPa | 5,6 | 10 | 10,1 | 5,6 | 10 |
| Zugfestigkeit | MPa | 16,4 | 15 | 18 | 16,4 | 15 |
| Bruchdehnung | % | 506 | 296 | 329 | 506 | 296 |
| Tan d (max) | | 0,212 | 0,167 | 0,174 | 0,212 | 0,167 |
| Abrieb | mm³ | 61 | 77 | 58 | 61 | 77 |

**Tabelle 6**

| **Bestandteil** | **Einheit** | **V5** | **V6** | **V7** | **V8** | **V9** | **V10** |
|---|---|---|---|---|---|---|---|
| NR TSR | phr | 10 | 10 | 10 | 10 | 10 | 10 |
| Vergleichspolymer V | phr | 90 | 90 | 90 | 90 | 90 | 90 |
| Modifikator ^{e)} | phr | - | 0,85 | 3,0 | - | 3,0 | - |
| Modifikator ^{f)} | phr | - | - | - | - | - | 7,75 |
| Ruß N339 | phr | - | - | - | 85 | 85 | 85 |
| Kieselsäure ^{b)} | phr | 95 | 95 | 95 | - | - | - |
| Silan ^{c)} | phf | 7,2 | 7,2 | 7,2 | - | - | - |
| ÖI TDAE | phr | 35 | 35 | 35 | 45 | 45 | 45 |
| Alterungsschutz ^{a)} | phr | 4 | 4 | 4 | 4 | 4 | 4 |
| Stearinsäure | phr | 2,5 | 2,5 | 2,5 | 2,5 | 2,5 | 2,5 |
| Zinkoxid | phr | 2,5 | 2,5 | 2,5 | 2,5 | 2,5 | 2,5 |
| DPG | phr | 2,0 | 2,0 | 2,0 | - | - | - |
| CBS | phr | 6,4 | 6,4 | 6,4 | 6,4 | 6,4 | 6,4 |
| Schwefel | phr | 0,64 | 0,64 | 0,64 | 0,64 | 0,64 | 0,64 |

| **Physikalische Eigenschaften** | | | | | | | |
|---|---|---|---|---|---|---|---|
| Härte RT | Shore A | 74,1 | 75,8 | 73,4 | 64 | 60 | 56 |
| Härte 70 °C | Shore A | 69,6 | 71,0 | 68,2 | 59 | 55 | 49 |
| Rückpr. RT | % | 18,0 | 17,8 | 18,5 | 18 | 19 | 20 |
| Rückpr.70 °C | % | 46,5 | 48,0 | 47,6 | 37 | 40 | 35 |
| Diff. Rückpr. | | 28,5 | 30,2 | 29,1 | 19 | 21 | 15 |
| Modul 50 | MPa | 2,0 | 2,2 | 1,8 | - | - | - |
| Modul 100 | MPa | 3,7 | 3,9 | 3,1 | 2,09 | 1,90 | 1,24 |
| Modul 200 | MPa | 7,3 | 7,7 | 6,1 | 5,63 | 5,17 | 2,79 |
| Zugfestigkeit | MPa | 12 | 11 | 12 | 14,4 | 14,3 | 12,9 |
| Bruchdehnung | % | 318 | 288 | 368 | 412 | 459 | 627 |
| Tan d (max) | | 0,196 | 0,195 | 0,206 | 0,272 | 0,268 | 0,299 |
| Abrieb | mm³ | 175 | 135 | 146 | 181 | 211 | 312 |

| | | | | | | | |
|---|---|---|---|---|---|---|---|
| Verwendete Substanzen: ^{a)} Alterungsschutzmittel: Ozonschutzwachs und 6PPD ^{b)} Kieselsäure: VN3, Fa. Evonik ^{c)} Silan: S2-Silan, 75 Gew.-% Disulfide, beispielsweise Si 266^{®}, Evonik Industries AG ^{d)} geblocktes Mercaptosilan NXT, 3-(Octanoylthio)-1-propyltriethoxysilan, Fa. Momentive ^{e)} Modifikator: 1,6-Hexandithiol ^{f)} Modifikator: doppelt geschütztes 1,6-Hexandithiol: | | | | | | | |

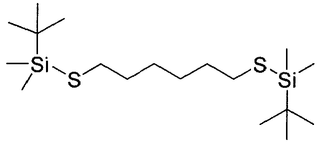

Wie aus Tabelle 4 hervorgeht, zeigt die erfindungsgemäße Kautschukmischung E1 enthaltend Ruß als Füllstoff gegenüber der Vergleichsmischung V1 eine Verbesserung im Zielkonflikt aus Rollwiderstand und Nassgriff, was an der größeren Differenz der beiden Indikatoren Rückprallelastizität bei 70 °C (Rollwiderstand) und Raumtemperatur (Nassgriff) erkennbar ist. Ferner ist der verbesserte Rollwiderstand der E1 an dem geringeren Wert für den maximalen Verlustfaktor (tan d max.) erkennbar. Zudem zeigt die erfindungsgemäße Kautschukmischung E1 gegenüber V1 ein vergleichbares Abriebverhalten und eine vergleichbare Zugfestigkeit.

Gegenüber der härtegleichen Referenz V2 zeigt die erfindungsgemäße Kautschukmischung E1 ein deutlich verbessertes Abriebverhalten.

Wie Tabelle 5 zu entnehmen ist, zeigen die erfindungsgemäßen Kautschukmischung E2, E3 und E4 enthaltend Kieselsäure als Füllstoff gegenüber den jeweiligen Vergleichsmischungen V3 und V4 eine Verbesserung im Zielkonflikt aus Rollwiderstand und Nassgriff, was an den größeren Differenzen der beiden Indikatoren Rückprallelastizität bei 70 °C (Rollwiderstand) und Raumtemperatur (Nassgriff) erkennbar ist. Hierbei scheint die Aufreinigung des Polymers nacherfolgter Modifikation (E3 mit gereinigtem modifiziertem Polymer A' vs. E2 mit modifiziertem Polymer A) keinen signifikanten Einfluss auf die Verbesserung des Zielkonfliktes aus Rollwiderstand und Nassgriff zu haben. Das Abriebverhalten von E2 und E4 liegt gegenüber den jeweiligen Vergleichsmischungen auf einem akzeptablen Niveau, während E3 enthaltend das gereinigte Polymer A*'* überraschenderweise ein gutes Abriebverhalten zeigt.

Somit ist es mit der erfindungsgemäßen Kautschukmischung möglich, insbesondere durch den Einsatz im Laufstreifen, den Zielkonflikt aus Rollwiderstand und Nassgriffverhalten auf Basis des Standes der Technik weiter zu verbessern ohne dass sich die Abriebfestigkeit verschlechtert.

Wie Tabelle 6 zu entnehmen ist, wird weder mit 1,6-Hexandithiol (V6 oder V7 versus V5 sowie V9 versus V8) noch mit dem doppelt geschütztem 1,6-Hexandithiol (V10 versus V8), welche als Modifikatoren dem Vergleichspolymer V beim Mischen der Kautschukmischung zugesetzt werden und nicht vorher an das Polymer geknüpft sind, die Verbesserungen beobachtet. Hier verschlechtern sich entweder die Differenzen der Rückprallelastizitäten sowie der Tangens Delta oder bleiben auf einem ähnlichen Niveau unter Verschlechterung des Abriebverhaltens.

Es ist also erfindungswesentlich, dass das Polymer A bereits gemäß Formel I) modifiziert ist, bevor es in die Kautschukmischung zusammen mit den anderen Mischungsbestandteilen eingemischt wird, und nicht unmodifiziertes Polymer und Modifikator separat der Kautschukmischung zugegeben werden.

## Patentansprüche

1. Elastomeres Polymer der folgenden Formel 1:
P-(-S-R¹-S-R²)*ₙ* Formel 1
worin
S ein Schwefelatom ist,
P eine Polymerkette ist, die erhältlich ist durch anionische Polymerisation wenigstens eines konjugierten Diens und gegebenenfalls einer oder mehrerer vinylaromatischer Verbindungen und die gegebenenfalls kettenendmodifiziert ist,
R¹ unabhängig ausgewählt ist aus C₁-C₁₁-Alkyl, C₆-C₁₁-Aryl, C₇-C₁₁-Aralkyl und C₂-C₁₁-Dialkylether, bevorzugt C₁-C₁₁-Alkyl, besonders bevorzugt C₁-C₈-Alkyl,
R² unabhängig ausgewählt ist aus H, C₁-C₁₁-Alkyl, C₆-C₁₁-Aryl, C₇-C₁₁-Aralkyl, C₂-C₁₁-Dialkylether und -SiR³R⁴R⁵ ist, worin R³, R⁴ und R⁵ unabhängig ausgewählt sind aus H, C₁-C₁₆-Alkyl, C₆-C₁₆-Aryl) und C₇-C₁₆-Aralkyl, und R² bevorzugt unabhängig ausgewählt ist aus H und -SiR³R⁴R⁵, worin R³, R⁴ und R⁵ unabhängig ausgewählt sind aus H, C₁-C₁₆-Alkyl, C₆-C₁₆-Aryl und C₇-C₁₆-Aralkyl, und
n eine ganze Zahl ist, ausgewählt aus 1-200, bevorzugt 1 bis 100, besonders bevorzugt 1 bis 50,
wobei die Gruppe(n) -S-R¹-S-R² an das Rückgrat der Polymerkette P gebunden sind.

2. Elastomeres Polymer gemäß Anspruch 1, worin das wenigstens eine konjugierte Dien ausgewählt ist aus 1,3-Butadien, 2-(C₁-C₅-Alkyl)-1,3-butadien, insbesondere Isopren (2-Methyl-1,3-butadien), 2,3-Dimethyl-1,3-butadien, 1,3-Pentadien, 2,4-Hexadien, 1,3-Hexadien, 1,3-Heptadien, 1,3-Octadien, 2-Methyl-2,4-pentadien, Cyclopentadien und 1,3-Cyclooctadien.

3. Elastomeres Polymer gemäß Anspruch 2, worin das konjugierte Dien 1,3-Butadien ist.

4. Elastomeres Polymer gemäß einem oder mehreren der Ansprüche 1 bis 3, worin das wenigstens eine konjugierte Dien in einer Gesamtmenge von 30 bis 100 Gew.-%, bezogen auf die Gesamtmenge an Monomeren, verwendet wird.

5. Elastomeres Polymer gemäß einem oder mehreren der Ansprüche 1 bis 4, worin die vinylaromatische Verbindung ausgewählt ist aus Styrol, C₁-C₄-Alkyl-substituiertem Styrol, insbesondere 2-Methylstyrol, 3-Methylstyrol, 4-Methylstyrol, 2,4-Dimethylstyrol, 2,4,6-Trimethylstyrol, α-Methylstyrol, 2,4-Diisopropylstyrol und 4-tert-Butylstyrol, Stilben, Vinylbenzyldimethylamin, (4-Vinylbenzyl)dimethylaminoethylether, N,N-Dimethylamino-ethylstyrol, tert-Butoxystyrol, Vinylpyridin sowie divinylaromatischen Verbindungen, insbesondere 1,2-Divinylbenzol, 1,3-Divinylbenzol und 1,4-Divinylbenzol, und einer Mischung aus zwei oder mehreren davon.

6. Elastomeres Polymer gemäß Anspruch 5, worin die vinylaromatische Verbindung Styrol ist.

7. Elastomeres Polymer gemäß einem oder mehreren der Ansprüche 1 bis 6, worin die eine oder mehreren vinylaromatischen Verbindungen in einer Gesamtmenge von 5 bis 70 Gew.-%, bezogen auf die Gesamtmenge an Monomeren, verwendet werden, mit der Maßgabe, dass di-, tri- und höher-vinylaromatische Verbindungen in einer Gesamtmenge von 1 Gew.-% oder weniger verwendet werden, bezogen auf die Gesamtmenge an Monomeren.

8. Verfahren zur Herstellung des elastomeren Polymers der Formel 1 wie in einem der Ansprüche 1 bis 7 definiert, umfassend die folgenden Schritte:
(i) anionisches Polymerisieren wenigstens eines konjugierten Diens und gegebenenfalls einer oder mehrerer vinylaromatischer Verbindungen zum Erhalt einer anionischen lebenden Polymerkette,
(ii) Abbrechen der Polymerisation und
(iii) Umsetzen der Polymerkette mit einer Verbindung der folgenden Formel 2 in Gegenwart eines Radikalstarters:
HS-R¹S-R² Formel 2
worin
S ein Schwefelatom ist,
R¹ unabhängig ausgewählt ist aus C₁-C₁₁-Alkyl, C₆-C₁₁-Aryl, C₇-C₁₁-Aralkyl und C₂-C₁₁-Dialkylether, bevorzugt C₁-C₁₁-Alkyl, besonders bevorzugt C₁-C₈-Alkyl, und
R² unabhängig ausgewählt ist aus H, C₁-C₁₁-Alkyl, C₆-C₁₁-Aryl, C₇-C₁₁-Aralkyl, C₂-C₁₁-Dialkylether und -SiR³R⁴R⁵ ist, worin R³, R⁴ und R⁵ unabhängig ausgewählt sind aus H, C₁-C₁₆-Alkyl, C₆-C₁₆-Aryl und C₇-C₁₆-Aralkyl, und R² bevorzugt unabhängig ausgewählt ist aus H und -SiR³R⁴R⁵, worin R³, R⁴ und R⁵ unabhängig ausgewählt sind aus H, C₁-C₁₆-Alkyl, C₆-C₁₆-Aryl und C₇-C₁₆-Aralkyl.

9. Verfahren gemäß Anspruch 8, worin das Abbrechen der Polymerisation in Schritt (ii) das Umsetzen der anionischen lebenden Polymerkette mit einer Protonenquelle oder einem funktionellen Reagens umfasst.

10. Verfahren gemäß Anspruch 8 oder 9, worin der Radikalstarter ausgewählt ist aus Peroxiden, Azoinitiatoren und Photoinitiatoren, insbesondere Peroxiden.

11. Unvulkanisierte Polymerzusammensetzung, umfassend das elastomere Polymer gemäß einem der Ansprüche 1 bis 7 und eine oder mehrere Komponenten ausgewählt aus (i) Komponenten, die als Ergebnis der Polymerisation zum Erhalt der Polymerkette P erhalten werden oder zu der Polymerisation hinzugegeben werden, und (ii) Komponenten, die nach Entfernung von Lösungsmittel aus der Polymerisation zurückbleiben.

12. Unvulkanisierte Polymerzusammensetzung gemäß Anspruch 11, die eine oder mehrere Komponenten umfasst, die ausgewählt sind aus Verstrecker-Ölen, Stabilisatoren, Füllstoffen und weiteren Polymeren.

13. Verwendung der unvulkanisierten Polymerzusammensetzung gemäß Anspruch 11 oder 12 zur Herstellung von (i) Schuhwerk, (ii) Golfbällen, (iii) Membranen, die keine Verstärkungen enthalten, (iv) Haftvermittlern, (v) modifizierten Kunststoffen und (vi) Folien, die nicht für die Automobil- oder Flugzeuginnenausstattung bestimmt sind.
